# EUROPÄISCHE PATENTSCHRIFT

(11) **EP 1 336 955 B1**
(45) Veröffentlichungstag und Bekanntmachung des Hinweises auf die Patenterteilung: **31.05.2006**
(21) Anmeldenummer: 03450037.1
(22) Anmeldetag: 13.02.2003
(51) Int. Cl.: G10L 13/02, G10L 15/18

(54) **Verfahren zur Erzeugung natürlicher Sprache in Computer-Dialogsystemen**
Method for natural speech synthesis in a computer-based dialogue system
Procédé pour la synthèse de parole naturelle dans un système de dialogue par ordinateur

(30) Priorität: 14.02.2002 AT 92022002
(43) Veröffentlichungstag der Anmeldung: 20.08.2003
(73) Patentinhaber: SAIL LABS Technology AG, 1090 Wien (AT)
(72) Erfinder: Kallulli, Dalina, 1130 Wien (AT)
(74) Vertreter: Margotti, Herwig Franz

(56) Entgegenhaltungen:
- REITER E ET AL: "Building applied natural language generation systems" NAT. LANG. ENG. (UK), NATURAL LANGUAGE ENGINEERING, MARCH 1997, CAMBRIDGE UNIVERSITY PRESS, UK, [Online] Bd. 3, pt.1, Seiten 57-87, XP002286563 Gefunden im Internet: URL:http://www.ics.mq.edu.au/~rdale/ publications/papers/1997/jnle97.pdf>
- MONICA ROGATI ET AL: "Training a Sentence Planner for Spoken Dialog: The Impact of Syntactic and Planning Features" EUROSPEECH 2001 SCANDINAVIA, Bd. 3, 2001, Seiten 1747-1750, XP007004702 AALBORG UNIVERSITY, DENMARK
- KAMM C A ET AL: "Design and evaluation of spoken dialog systems" AUTOMATIC SPEECH RECOGNITION AND UNDERSTANDING, 1997. PROCEEDINGS., 1997 IEEE WORKSHOP ON SANTA BARBARA, CA, USA 14-17 DEC. 1997, NEW YORK, NY, USA,IEEE, US, 14. Dezember 1997 (1997-12-14), Seiten 11-18, XP010267491 ISBN: 0-7803-3698-4

## Beschreibung

### Bereich der Erfindung

Der Bereich der gegenständlichen Erfindung ist die interaktive Mensch-Maschine Kommunikation. Im Detail handelt es sich hierbei um ein neues Verfahren der Generierung menschlicher, natürlicher Sprache im Rahmen eines Dialog-Systems.

Die Erfindung beschreibt den sogenannten "Sail Labs Answer Generator (SAG)" (Sail Labs Antwort-Generator), einen in Echtzeit laufenden, sprachunabhängigen und allgemein anwendbaren Generator, welcher die Verwendung dynamisch-generierter menschlicher Sprache in Dialog-Anwendungen ermöglicht. Das heißt, mittels SAG müssen Entwickler nicht schon im voraus alle möglichen natürlich-sprachigen Äußerungen spezifizieren. SAG besteht aus einer Komponente für taktische Generierung und spezifiziert eine Schnittstelle zu Lexika und zu einer strategischen Komponente. SAG betont Modularität, Qualität und Geschwindigkeit bei der Generierung.

### Beschreibung und Nachteile bestehender Lösungen

Die Generierung menschlicher, natürlicher Sprache (Natural Language Generation, NLG) stellt das Teilgebiet der künstlichen Intelligenz und Computerlinguistik dar, welches sich Computersystemen widmet, die verständliche Texte in einer menschlichen Sprache produzieren. Eingabedaten an ein NLG-System bestehen typischerweise aus einer nicht-linguistischen Repräsentation von Information an Hand derer Text in einer Vielzahl von Formen (Dokumente, Berichte, Erklärungen, Hilfe- und Fehlermeldungen) automatisch erzeugt wird (siehe Reiter and Dale 2000).

NLG stellt eine aufstrebende, vielversprechende Technologie für eine Vielfalt von Anwendungen (tatsächliche und potentielle) dar. Zum Beispiel wird NLG-Technologie bereits in kommerziellen Anwendungen zur teilweise automatischen Erstellung von Routine-Dokumenten verwendet. Sie befindet sich gleichfalls im Laboreinsatz zur Präsentation und Erklärung von Informationen an Anwender, welche nicht mit nicht-linguistischen Daten in Berührung kommen wollen. Der Fokus der NLG-Forschung lag bisher auf der Generierung ganzer Dokumente (z.B. Benutzerhandbücher etc.). Dieses Teilgebiet erscheint deshalb so interessant, als dadurch die Stagnation im Feld der automatischen Übersetzung wettgemacht werden könnte. Allerdings kam in sehr wenigen Systemen (hauptsächlich im Forschungsbereich) NLG-Technologie im Rahmen von Echtzeitanwendungen zum Einsatz. Kommerzielle Anwendungen im Bereich der Dialog-Systeme verwenden bis zum heutigen Tag NLG-Technologie nur in ihrer primitivsten und eingeschränktesten Form als vorgefertigte Aufnahmen. Auf lange Sicht stellt die Domäne der Dialoganwendungen einen vielversprechenden Anwendungsbereich für NLG dar, die eine natürlichere und umfassendere Interaktion mit Maschinen ermöglicht, als das heutzutage der Fall ist.

Das Ziel der gegenständlichen Erfindung ist, NLG-Technologie mittels dynamischer Generierung anstatt mittels Verwendung vorgefertigter Texte in Dialog-Systemem zum Einsatz zu bringen.

Um die Bedeutung der Verwendung dynamischer Generierung für NLG-Systeme zu erfassen, soll die Beziehung zwischen der Realisierungkomponente und NLG näher betrachtet werden.

Die Realisierungskomponente (die den eigentlichen Vorgang der Sprachproduktion betrifft) stellt eine Standardkomponente in NLG-Systemen dar. Oft wird diese Komponente auch taktische Generierung oder "WIE-Generierung" genannt. Dies im Gegensatz zur strategischen Generierung, die auch als "WAS-Generierung" oder "Text-Planungskomponente" bezeichnet werden kann (McKeown 1985). (Obgleich in der Architektur von NLG-Systemen und der genauen Aufteilung der Arbeitsaufgaben unter den beteiligten Modulen gewisse Unterschiede bestehen, besitzen alle Generatoren eine Realisierungkomponente. Zum Beispiel kommt im NLG-System von Reiter und Dale (2000) ein drei-schichtiges Modell zum Einsatz, welches zwischen Dokumentplanungs-, Mikroplanungs- und Realisierungskomponente unterscheidet.) Allgemein betrachtet erstellt die Textplanungskomponente eine abstrakte Spezifikation des Inhalts und der Struktur eines Textes. Wissen über die Domäne und Anwendung und welche Art von Information das spezifische kommunikative Ziel adäquat vermittelt, oder etwa ein Modell des Benutzers fließen in diesen Vorgang ein. Die Aufgabe der Realisierungskomponente ist sodann, die so bestimmte Information in passende Einheiten natürlicher Sprache zu zerlegen und schließlich die abstrakte Spezifikation der Textplanungskomponente in natürliche Sprache zu verwandeln.

Folgende Verfahren kommen heute in Realisierungskomponenten zum Einsatz: vorgefertigte Texte, Text-Muster, phrasenbasierte und merkmalsbasierte Ansätze (siehe Hovy 1997).

Ein vorgefertigter Text besteht aus einer Zeichenkette, die von einem System-Entwickler noch vor der eigentlichen Abarbeitung des Programmes definiert wurde, um ein bestimmtes kommunikatives Ziel zu erreichen (z.B. Warnung, Vorschlag), sobald ein bestimmtes Ereignis eintritt (trigger). Dieses Realisierungsverfahren wird in einer Vielzahl von Computer-Anwendungen eingesetzt, um Hilfe- oder Fehlermeldungen zu generieren.

Ein Text-Muster besteht aus einem vordefinierten Text-Gerüst dessen leere Felder durch Informationen des Benutzers oder der Anwendung zur Laufzeit des Systemes gefüllt werden. Die Eingangsdaten eines Text-Muster basierten Systems sind Strukturen von Merkmalen mit korrespondierenden variablen Werten. Ein bekanntes Beispiel aus dem Bereich der Text-Muster basierten Realisierung stellen e-mail Zusammenführungsprogramme (mail-merge programs) dar. Text-Muster basierte Systeme sind mächtiger und flexibler als jene, die auf vorgefertigten Texten beruhen. Sie sind zudem schneller und daher weit besser für den Einsatz in Echtzeit Applikationen geeignet, weil die Größe und Anzahl der zu verarbeitenden Strukturen relativ gering ist. Obwohl die Qualität Text-muster basierter Systeme die von Systemen, welche auf vorgefertigten Texten beruhen, übersteigt, bietet sie jedoch nicht jenes Maß an feinmaschiger Kontrolle über die Textausgabe, die wünschenswert wäre und die durch grammatikbasierte Systeme ermöglicht wird.

Phrasenbasierte Systeme stellen gleichsam generalisierte Text-Muster dar, die unterschiedliche Arten von Phrasen, welche in einer natürlichen Sprache vorkommen, repräsentieren. Diese Phrasen werden mittels Regeln (einer Grammatik) zueinander in Beziehung gestellt. Diese Regeln stellen wiederum eine strukturelle Beschreibung wohlgeformter Ausdrücke in natürlicher Sprache dar.

In merkmalsbasierten Realisierungssystemen werden alle möglichen minimalen Ausdrucksmöglichkeiten durch individuelle Merkmale dargestellt (z.B. kann ein Hauptwort bestimmt oder unbestimmt sein, im Singular oder Plural, etc.) Der Generierungsprozeß besteht aus dem Abarbeiten eines Merkmals-Auswahl-Netzwerkes (traversing a feature selection network) oder durch Unifikation mit einer Grammatik, die aus Merkmalsstrukturen besteht. Dieser Vorgang wird fortgesetzt, bis eine vollständige Menge an Merkmals-Werte Paaren erstellt wurde, welche jeden Teil der Eingabe realisieren. Merkmalsbasierte Systeme sind aufgrund der Einfachheit ihres Ansatzes und ihrer Flexibilität sehr mächtig. Sie erlauben die Realisierung hoch-qualitativen Textes. Jedoch sind sie aufgrund der Tatsache, dass die gesamte Grammatik und nicht ausschließlich die Eingabe an die Realisierungskomponente abgearbeitet werden muss, nicht optimal für den Einsatz in Echtzeit-Applikationen geeignet.

Dynamische Generierung ist aus einer Vielzahl von Gründen simpleren Verfahren, wie der Generierung mittels vorgefertigtem Text, vorzuziehen. Diese sind zwar einfach zu konstruieren, jedoch sehr unflexibel und verschwenderisch mit Resourcen. Ein offensichtlicher Vorteil dynamischer Generierungssysteme sind ihre umfassenden Möglichkeiten zur Anpassung. Die Geschwindigkeit der Generierung stellt speziell im Bereich von Dialog-Systemen einen zentralen Punkt dar, da hierbei Interaktion in Echtzeit erfolgen muss. Wie in einschlägiger Literatur (McRoy et al. 2001) dargelegt wird, bestehen zwei Möglichkeiten, wie Generierungssysteme natürlicher Sprache mit diesen Einschränkungen umgehen können: entweder antizipiert und spezifiziert der System-Designer schon vor dem Einsatz alle möglichen Ausgaben in natürlicher Sprache und stellt die notwendige Programmlogik bereit, um zur rechten Zeit die korrekte Ausgabesequenz zu erzeugen (in der Hoffnung, dass keine Probleme auftreten werden), oder aber das System muss in der Lage sein, natürlichsprachige Ausgaben dynamisch in Echtzeit zu erzeugen. Abhängig von den Zielen des Designs und speziell von der Anforderung, Software zu erzeugen, welche den Benutzern immer besser angepasste Antworten gibt, stellen Zeit und Aufwand zur Integration von solch komplexer Software wie dynamische Generierung auf lange Sicht einen Vorteil gegenüber Zeit und Aufwand der manuellen Erzeugung aller Ausgabeketten dar.

Bestehende Generierungssysteme im Zusammenhang mit Dialog-Systemen sind entweder zu langsam (e.g. Penman [Mann 1983], FUF/SURGE [Elhadad 1992 and 1993]), da ihre Ansätze das Abarbeiten der gesamten Generierungsgrammatik erfordern, anstatt ausschließlich die Eingabe abzuarbeiten, oder ihre Grammatik ist zu eingeschränkt (e.g. TEXT [McKeown 1985]), was zu Problemen bei der Anpassung und Portabilität führt.

Weitere Probleme sind:
- dass die Implementierung einer Grammatik an eine grammatische Theorie gebunden ist, welche syntaktisch und strukturell anstatt von semantisch und funktional ist (e.g. Mumble [Meteer et al. 1987]) was zur Folge hat, dass die Anwendung eine große Menge an detailierter Information über die Syntax der jeweiligen Ziel-Sprache besitzen muss,
- dass die Realisierungskomponente als Produktionssystem implementiert ist (e.g. TG/2 [Busemann 1996, Busemann and Horacek 1998]), was sie unbrauchbar für den Einsatz in Echtzeitumgebungen macht, aufgrund der inhärent ineffizienten Ableitung von Resultaten in solchen Systemen,
- dass Realisierung durch statistische Komponenten durchgeführt wird, was zu ungrammatischen Resultaten führen kann (e.g. Nitrogen [Knight and Hatzivassiloglou 1995, Langkilde and Knight 1998a and 1998b]),
- oder dass die Realisierung durch einen musterbasierten Ansatz implementiert wird (e.g. YAG [McRoy et al. 2001]), was wiederum zu Kompromissen bei der Ausgabequalität führt.

Einen Überblick der besten bestehenden Systeme geben Reiter and Dale (1997,2000) and McRoy et al. (2001).

### Ziel der Erfindung

Das Ziel der vorliegenden Erfindung gemäss den beigefügten Ansprüchen ist, die Effizienz und Flexibilität der dynamischen Erzeugung natürlicher Sprache im Rahmen von Echtzeit-Anwendungen zu verbessern. Dies geschieht durch eine Reihe innovativer Design-Schritte und die Balance von Einflussfaktoren.

### Zusammenfassung und Vorteile des vorgeschlagenen Systems

Die Mehrzahl der bestehenden Ansätze im Bereich der Realisierung sind ausschließlich deklarativer Natur. Deklarativ in diesem Sinne bedeutet, dass das Generierungssystem einen generischen Algorithmus definiert, welcher die Kombination von Eingabe und Spezifikation der Grammatik kontrolliert um die Ausgabe des Generierungsprozesses zu erzeugen. Diese Ausgabe kann anschließend linearisiert (in Text verwandelt) werden.

Das System welches hier beschrieben wird, unterscheidet sich von den genannten deklarativen Ansätzen, indem es prozeduraler Natur ist. Im Unterschied zu deklarativen Ansätzen, welche eine Menge an Anforderungen definieren, die auf die Ausgabe zutreffen müssen, und einen generischen Algorithmus, der sicherstellt, dass eine spezielle Eingabe mit einer Struktur zusammenpasst, die diese Anforderungen erfüllt, stellt ein prozeduraler Ansatz eine Definition einer Sequenz von Schritten dar, die die Eingabe in die Ausgabe des Systems überführen sollen.

Im gegenständlichen System besteht der prozedurale Ansatz aus folgenden Schritten:
- Generierung - Schritt 1: Erzeugung einer semantisch-pragmatischen "tiefen" Struktur aus der Eingabe, die durch die strategische Generierungskomponente bereitgestellt wurde.
- Generierung - Schritt 2 : Zuweisung syntaktischer Funktionen und Kategorien
- Generierung - Schritt 3: Anwendung elementarer Operationen wie Einfügung und Manipulation von Teil-Bäumen (z.B. Indentifizierung von Koordinationen, Attributen und Beziehungen) wird durchgeführt
- Generierung - Schritt 4: Zugriff auf lexikalische und/oder sprach-spezifische Informationen. Nach einer Auswertung der Konzepte die aus der strategischen Komponente übernommen werden, werden diese durch kanonische Formen unter Zugriff auf das Lexikon ersetzt. Dieser Lexikonzugriff erlaubt die Anwendung von Operationen für mehrere Sprachen (multilingual facilities)
- Generierung - Schritt 5: Evaluierung des strukturierten, "tiefen" syntaktischen Eingabebaums. Dieser Schritt generiert syntaktische Strukturen (welche an normalisierten. Schnittstellenstrukturen orientiert sind) and behandelt lückenschaffende Phänomene und Einfügungen als sprachspezifische Strukturen. Desgleichen werden hier untergeordnete Satzteilstrukturen behandelt.
- Generierung - Schritt 6: Realisierung und Expansion von Struktur-Typen. Dieser Schritt behandelt die Einfügung und/oder Umformung von vor-definierten Strukturen. Gleichfalls werden Einfügung von Artikeln und Satzordnung von Sub-Strukturen aus Nominalphrasen und Adverbialphrasen vorgenommen.
- Generierung - Schritt 7: Morphologie Erzeugung. Dieser Schritt führt einen Aufruf der morphologischen Generierungs-Komponente ('flexer tool') durch.
- Generierung - Schritt 8: Abschließende Aufbereitung. In diesem Schritt werden phonetische Verfeinerung, Verfeinerung der Ausgabe und Säuberungsoperationen am Baum und den Knoten durchgeführt.
- Generierung - Schritt 9: Ausgabe der erzeugten Funktionen. Dieser Schritt erstellt eine graphische Aufbereitung der resultierenden Baumstruktur und der Ausgabesequenz (eigentlichen Zeichenkette)

Im Gegensatz zu deklarativen Ansätzen erlaubt der hier dargestellte prozedurale Ansatz ein feines Maß an exakter, detailierter Kontrolle über alle Schritte von der Eingabe- bis zur Ausgabe-Repräsentation. Dies stellt potentiell einen effizienteren Weg für spezielle Generierungsanwendungen dar, da das prozedurale Verhalten der Generierungskomponente exakt an die Aufgabenstellung angepasst werden kann.

Designer eines Generierungssystems müssen im Normallfall zwischen der Qualität des Textes und der Geschwindigkeit, mit der dieser erzeugt wird, abwägen. Phrasen- und merkmalsbasierte Systeme, die ein hohes Maß an Qualiät der erzeugten Texte liefern, sind typischerweise nicht optimal für den Einsatz in Echtzeitumgebungen geeignet. Die Geschwindigkeit in solchen Systemen ist typischerweise eine Funktion der Größe der Grammatik, da diese jedoch während der Realisierung vollständig durchsucht werden muss. Die Kunst, eine gute Generierungsgrammatik zu erstellen liegt in einer ausgewogenen Balance zwischen Allgemeingültigkeit und Effizienz. Ein prozedurales System, wie es hier dargelegt wird, ist spezifischer als ein deklaratives System und folglich besser geeignet, um in zeitkritischen Anwendungen zum Einsatz zu kommen.

Die Möglichkeit, Schnelligkeit in der Generierung und exakte Kontrolle über den generierten Text zu kombinieren, stellt einen wesentlichen und klaren Vorteil unseres Systems über den Stand der Technik dar.

### Beschreibung einer bevorzugten Ausführungsform

Diese Erfindung betrifft die Erzeugung natürlichsprachiger Äußerungen in einem Dialog-System. Sie ermöglicht die Kombination von schneller und hoch-qualitativer Ausgabe von Text.

Die gegenständliche Erfindung kann auch über den Rahmen von Dialog-Systemen hinaus in weiteren Echtzeit-Anwendungen eingesetzt werden (z.B. in natürlich-sprachigen Schnittstellen zu Datenbanken). Teile der Erfindung (SSRL) können in anderen Gebieten der linguistischen Darstellung von Wissen Anwendung finden (z.B. Zusammenfassung von Texten)

Die Erfindung besteht aus einem konkreten, spezifischen Verfahren, das entwickelt wurde, um die Erzeugung natürlicher Sprache in Echtzeitumgebungen zu ermöglichen. Sie besteht aus einer Sequenz von Schritten. In der bevorzugten Ausführungsform dieser Erfindung werden diese Schritte durch eine Gruppe von Werkzeugen realisiert. Diese sind Comprendium Kernel 5.0, entwickelt von Sail Labs, München, der LISP-artige Ausdrücke, Lingware genannt, interpretiert, weiters die "Simple Semantic-pragmatic Representation Language" (SSRL, eine einfache, semantisch-pragmatische Wissensrepräsentationsprache), eine auf Generierung ausgelegte Wissensrepräsentationssprache (GDKRL) und einem lexikon-losen Flexions-Algorithmus zur Erzeugung morphologischer Merkmale.

Eine Ausführungsform der Erfindung wird nachfolgend im Detail beschrieben. Dabei wird Bezug auf die beigelegten Zeichnungen genommen, wobei in Figuren 1 und 2 die verschiedenen Komponenten des Verfahrens dargestellt werden, so wie sie in der Erfindung beschrieben sind. Gleichfalls wird die Interaktion der Komponenten dargestellt. Die Figuren 3 bis 15 stellen die verschiedenen Schritte der Generierung dar.

### a) Beschreibung der Komponenten - Überblick

Im gegenständlichen System beginnt die taktische Generierung mit einer semantisch-pragmatischen Darstellung, die aus einem Satz von Aussagen (Prädikate und Meta-Prädikate), welche semantische, syntaktische, pragmatische und morphologische Informationen des zu generierenden Textes beinhalten, besteht. Die Elemente dieser Repräsentation werden "Simple Semantic Representation Language" (SSRL) Ausdrücke genannt. SSRL beschreibt dabei Ereignis und Einheiten-Knoten eines Netzwerkes, sowie deren Eigenschaften und Beziehungen. Ein Beispiel für die SSRL-Repräsentation welche dem Satz "Ihre Bestellung besteht aus einer großen Pizza mit Käse, Artischocken, Pfefferoni und Schinken, einer grossen Coca-Cola und einem Dessert mit Schlagsahne" entspricht, ist unter Beispiel 1 zu sehen.

SSRL-Repräsentationen werden durch einen Textplanungsvorgang erzeugt (die strategische Generierung, die die Aussage (das WAS) des Satzes erstellen soll), die den Inhalt und die (abstrakte) Struktur einer Äußerung festlegt. SSRL-Repräsentationen dienen hierbei als Schnittstelle zwischen strategischer und taktischer Generierung.

Die taktische Generierungskomponente verwendet die Comprendium Kernel 5.0 Programmierumgebung von Sail Labs München. Diese interpretiert die Programmiersprache "Lingware", in welcher wiederum die eigentliche Generierungsgrammatik geschrieben ist.

"Lingware" basiert auf einer Menge von LISP- und LISP-artigen Funktionen, d.h. eingebaute Funktionen, welche auf LISP aufbauen. Diese stellen linguistische Operatoren zur Verarbeitung natürlicher Sprache dar. Lingware wurde bisher im Rahmen von maschineller Übersetzung für die Analyse, den Transfer von einer Sprache in eine andere und die Generierung der Übersetzung bei Sail Labs verwendet. Nun wird es erstmalig dazu verwendet, um Generierungsgrammatiken für Dialog-Systeme zu erstellen. Im folgenden werden die Programm-Teile der Generierungsgrammatik "Lingware-Prozeduren" genannt.

Jedem Ausdruck der Repräsentationssprache entspricht genau eine Lingware-Prozedur mit gleichem Namen. Die Namen der SSRL-Ausdrücke repräsentieren also gleichzeitig sprachliche Einheiten wie Programmteile der taktischen Generierungskomponente.

Die Sequenzen der SSRL-Ausdrücke wird durch Aktionen, die von der Anwendung (z.B. einem Dialog-Manager) initiiert oder spezifiziert werden, festgelegt. Einzelne SSRL-Ausdrücke wiederum werden durch Aufruf der entsprechenden gleichnamigen Prozeduren ausgeführt.

Die taktische Komponente bei der Generierung natürlich-sprachigen Textes besteht aus der Erstellung von "tiefen" und Oberflächen-Baumstrukturen und von morphologisch wohlgeformten Sequenzen von Einheiten von Text. Die Baumstrukturen werden dabei in verschiedenen Schritten durch wohl-definierte Sequenzen von Lingware-Prozeduren generiert, welche die Implementation der linguistischen Grammatik darstellen.

Ein lexikon-loser Flexionsalgorithmus ("flexer") kommt dabei für die morphologische Generierung zur Anwendung. Diese Komponente ist gleichfalls Bestandteil der taktischen Generierungskomponente.

### Taktische Generierung : Eingabe und Ausgabe

### Eingabe: SSRL-Repräsentation

### Example (1):

### (state "x1" "bestehen")

(experiencer "x2" "x1" "x3")
(entity "x3" "bestellung")
(attribute "x4" "speaker")
(has-attr "x5" "x3" "x4")
(related "x50" "of' "x 1 " "x 11 ")
(entity "x11" "pizza")
(related "x16" "comb" "x11" "x17")
(entity "x17" "käse")
(logical "x18" and "x17" "x19")
(entity "x19" "artischocke")
(logical "x20" and "x17" "x21 ")
(entity "x21" "schinken")
(logical "x22" and "x17" "x23")
(entity "x23" "pfefferoni")
(logical "x24" and "x11 " "x25")
(entity "x29" "coca-cola")
(attribute "x26" "gross")
(has-attr "x27" "x29" "x26")
(logical "x52" and "x 11" "x51")
(entity "x51" "dessert")
(related "x55" "comb" "x51" "x56")
(entity "x56" "schlagsahne")
(attribute "x12" "gross")
(has-attr "x13" "x11" "x12")
(number "x 11" sg)
(defness "x 11" indef)
(number "x29" sg)
(defness "x29" indef)
(number "x51" sg)
(defness "x51" indef)
(number "x17" sg)
(defness "x17" gen)
(number "x19" pl)
(defness "x19" indef)
(number "x21" sg)
(defness "x21" gen)
(number "x23" pl)
(defness "x23" indef)
(number "x56" sg)
(defness "x56" gen)
(tense "x1" pr)
(smood "x1" dcl)

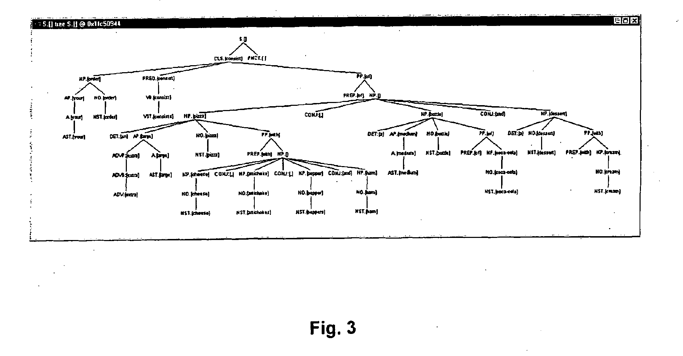

Der daraus entstandene Baum wird in Fig. 3 dargestellt.

Die daraus resultierende Textausgabe lautet: "Ihre Bestellung besteht aus einer grossen Pizza mit Käse, Artischocken, Pfefferoni und Schinken, einer grossen Coca-Cola und einem Dessert mit Schlagsahne"

### b) Funktionalität : Komponentenmerkmale

Die prozeduralen Regeln des gegenständlichen Systems verwenden Merkmalsstrukturen und Unifikation derselben, um die Anwendbarkeit von Phrasenstrukturregeln und Merkmalsinstantiierungen zu überprüfen.

Die taktische Generierungskomponente beginnt mit einer initialen Baumstruktur und der SSRL-Repräsentation, die dem semantischen, pragmatischen und lexikalischen Inhalt der Äußerung entspricht.

Der initiale Baum wird durch eine normalisierte, sich zweifach verzweigende Struktur definiert. Diese Baumstruktur besitzt eine Wurzel (S für englisch "Sentence") und zwei Nachfolgeknoten, die der (Text-) Begrenzung dienen. Diese werden im folgenden mit $ bezeichnet.

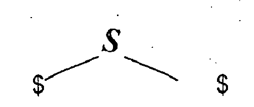

Die entsprechende SSRL-Repräsentation wird entweder durch eine vorgeschaltete (strategische) Komponente erzeugt, die Teil der Anwendung selbst ist (z.B bei Datenbanken-Abfrage-Applikationen, wo eine direkte Antwort basierend auf Abfrageergebnissen gegeben werden muss) oder durch eine zwischengeschaltete Komponente zwischen Anwendung und taktischer Generierung, wie im Falle von Dialog-Systemen. Unter letzteren Rahmenbedingungen vordefiniert und plant eine Dialog-Management-Komponente die Erweiterung der Systemäußerungen und sendet diese an die Textmodellierungskomponente, welche ihrerseits die vom Dialog-Manager bereitgestellte Elementarinformation ergänzt und die Endsequenz der SSRL-Ausdrücke bestimmt. Diese Sequenz stellt die Basis für die taktische Generierung dar.

Die den sinntragenden Einheiten der Repräsentation entsprechenden verschiedenen SSRL-Ausdrücke stehen in einer exakten Beziehung zu den Funktionen und Programmteilen der Text-Generierungskomponente. Der Generierungsprozeß wird durch diese Funktionen in Gang gesetzt. Die Namen der Repräsentationseinheiten und der Lingware-Funktionen sind identisch: ein SSRL-Ausdruck als Teil der Repräsentation stellt gleichzeitig einen speziellen Teil der GenerierungsLingware dar, die von einer Prozedur mit demselben Namen (wie der SSRL-Ausdruck) aufgerufen wird.

Zum Beispiel ruft der SSRL-Ausdruck (action x1 "start") die Lingware-Prozedur (action x1 "start") auf, wobei *"action*" der Name des aufgerufenen Unterprogrammes ist und *"x1*" und *"start"* die Programmargumente darstellen.

Die Prozedur "*action*" stellt sicher, dass ein neuer Knoten in die Baumstruktur eingefügt wird und setzt Zeiger (pointers), Merkmale und Werte im neuen Knoten in Übereinstimmung mit den übergebenen Parametern. In diesem Fall *ev-id x1* und den Begriff *"start*". Den SSRL-Ausdrücken entsprechende Lingware-Prozeduren führen den ersten Schritt des Generierungsprozesses aus: sie fügen neue Knoten in eine flache Baumstruktur ein und weisen den Knoten zusätzliche Informationen zu. Der erste Schritt der taktischen Generierung besteht folglich aus dem Erzeugen einer Basis-Baumstruktur mit Knoten, deren Attributwerte denjenigen der korrespondierenden

SSRL-Struktur gleichen.

Ist die gesamte Sequenz an SSRL-Ausdrücken abgearbeitet worden, d.h. sind alle entsprechenden Lingware-Prozeduren aufgerufen und ausgeführt worden, so entsteht eine flache semantisch-pragmatische Baumstruktur, welche den zu generierenden Satz repräsentiert. Die Knoten dieses Baumes enthalten elementare Merkmal-Wert Paare. Diese bestehen aus linguistischen Funktionen und Indikatoren, die ihre Beziehungen beschreiben.

In den folgende Schritten werden weitere Prozeduren in einer genau definierten Reihenfolge aufgerufen. Diese bauen die strukturelle Beschreibung weiter auf und erzeugen, beginnend mit dem "tiefen" semantisch-pragmatischen Baum, einen Baum, der die Oberflächenstruktur repräsentiert. Eine separate morphologische Komponente wird danach aufgerufen, um morphologisch wohl-definierte Oberflächenstrukturen (d.h. die eigentliche Wortfolge) zu erzeugen, die die Ausgabe der Generierungskomponente bilden.

Hier seien nochmals die einzelnen Schritte im Überblick dargestellt: während des Generierungsprozesses erzeugt die Realisierungskomponente aus semantisch-pragmatischen Ausdrücken eine flache, "tiefe" semantisch-pragmatische Struktur . Von dieser "tiefen" semantisch-pragmatischen Struktur wird eine tiefe syntaktische Struktur erzeugt und aus dieser wiederum eine Oberflächenstruktur (d.h. der Ausgabesatz). Aus interner Sicht des Vorganges können dabei die folgenden Schritte unterschieden werden:
- der erste Schritt formt semantisch-pragmatische Ausdrücke in eine flache "tiefe" Baumstruktur um - dieser Teil ist zur Gänze sprachunabhängig.
- der zweite Schritt formt die semantisch-pragmatische Baumstruktur in eine "tiefe" syntaktische Baumstruktur um. Dieser Schritt ist gleichfalls noch sprachunabhängig.
- der dritte Schritt formt die "tiefe", sprachunabhängige syntaktische Struktur in eine sprachabhängige Oberflächenstruktur und schließlich in eine wohlgeformte Sequenz an flektierten Wörtern um.

Die Umformung oder Transformation von Baumstrukturen stellt mithin den wichtigsten und zugleich generellsten Typ an Operationen bei der Text-Erzeugung dar. Dabei kommen folgende Mittel und Verfahren zum Einsatz:
- ein vordefinierter Satz an Operatoren der verwendeten Lingware
- im Speziellen, der Transformationsformalismus (der xfm Operator) von Lingware
- die Definition elementarer und spezifischer Lingware-Prozeduren, die Teil-Bäume in bereits bestehende Bäume einfügen oder diese modifizieren (dieses Verfahren ist den "Tree-Adjoining-Grammars", sogenannten TAGs verwandt (Joshi 1987, Joshi und Shabes 1997))
- der Kontext eines Teilbaums wird durch seine Knotenbelegungen definiert
- Transformationen werden durch Kontextabhängigkeiten definiert, die durch strukturelle Beschreibungen und Knotenbelegungen (Bedingungen auf den Attributen/Werten) bestimmt sind

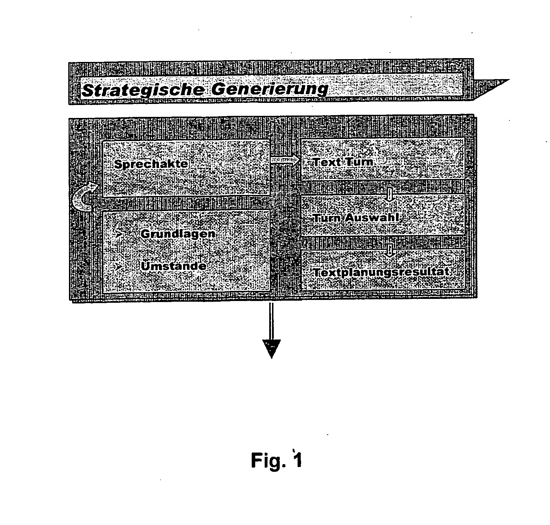

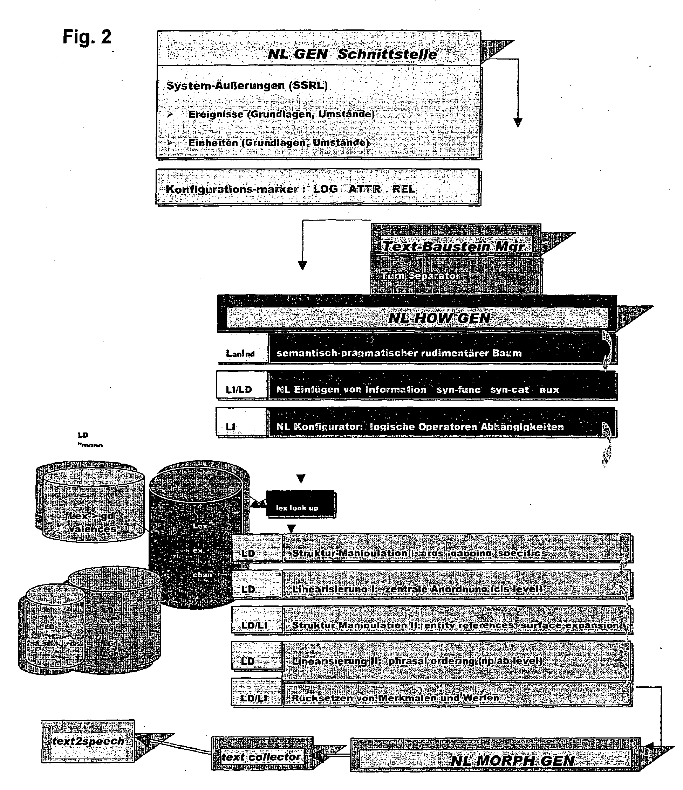

Figuren 1 und 2 geben einen Überblick über die verschiedenen Komponenten unter dem Blickpunkt der dynamischen Generierung und über deren Interaktion.

### c) Ablauf: Schritte der Generierung

### Initiale Operationen

Der initiale Generierungschritt, **g** genannt, dessen Parameter durch die SSRL-Ausdrücke gegeben sind, ruft die Prozedur **generate** auf, deren Parameter die SSRL-Eingabedatei ist. Die Prozedur **generate** liest die jeweilige SSRL-Sequenz ein und übergibt diese dem xfm (Lingware-) Operator (ein Operator, der zwei Argumente besitzt: die Beschreibung der Eingabe-Baumstruktur und die umgeformte Ausgabe-Baumstruktur), der die initiale Baumstruktur erzeugt und/oder bestehende Resultate zurücksetzt.

Nach der Erzeugung des initialen Baumes ruft *generate* die folgenden Prozeduren Schritt für Schritt auf. Diese führen den Prozess der Generierung aus.

### Beispiel (2)

SSRL-Eingabe-Datei um den folgenden englischen Satz zu erzeugen: "The phone number is used to identify your records in our files." ("Die Telefonnummer wird dazu benutzt, Ihre Daten in unseren Akten zu verifizieren")
(action "x1" "use")
(object "x2" "x1" "x3")
(entity "x3" "number")
(related "x4" "comp" "x3" "x5")
(entity "x5" "phone")
(action "x6" "identify")
(object "x7" "x6" "x8")
(entity "x8" "record")
(attribute "x9" "your")
(has-attr "x10" "x8" "x9")
(space "x11" "in" "x6" "x12")
(entity "x12" "file")
(attribute "x13" "our")
(has-attr "x14" "x12" "x13")
(number "x3" sg)
(number "x8" pl)
(number "x12" pl)
(defness "x3" def)
(defness "x8" indef)
(defness "x12" indef)
(tense "x1" pr)
(voice "x1" pas)
(smood "x1" dcl)
(smood "x6" dcl)
(sentence-type "x1" main)
(sentence-type "x6" infin)

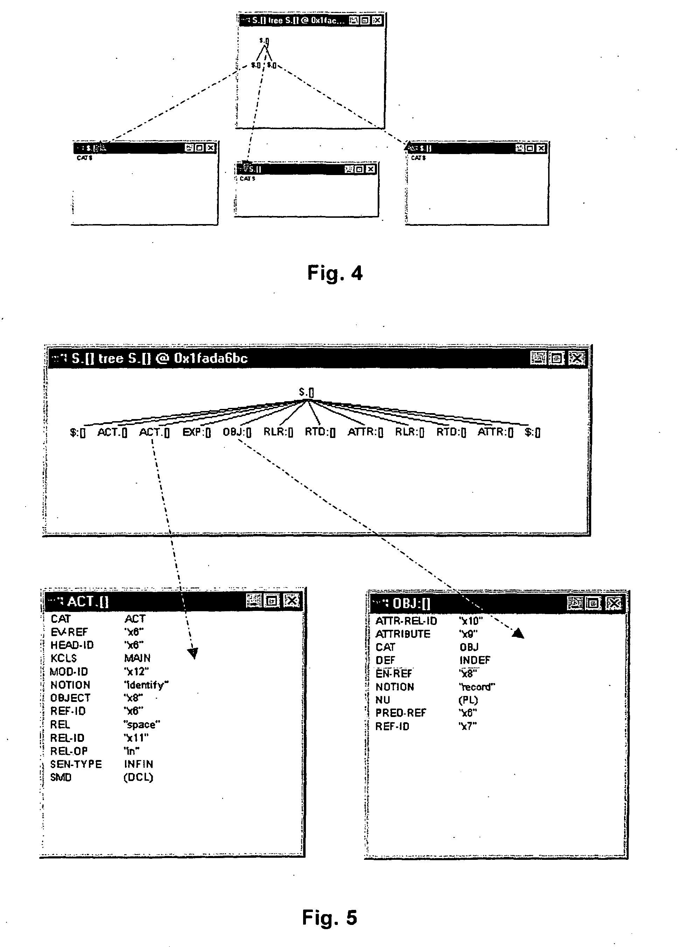

Die initiale Baumstruktur ist in Fig. 4 dargestellt.

### Generierung - Schritt 1: Generierung einer semantisch-pragmatischen "tiefen" Struktur

Um den initialen Eingabe-Baum (S → **$ $)** zu vervollständigen, wird jeder Ausdruck der jeweiligen SSRL-Sequenz ausgewertet. Das Resultat dieser Auswertung ist ein flacher semantisch-pragmatischer Baum. Die Auswertung selbst erfolgt mittels der Prozedur evals, deren Parameter die Sequenz von SSRL-Ausdrücken ist.

Fig. 5 stellt den flachen semantisch-pragmatischen Baum dar.

### Generierung Schritt 2: Zuweisung von syntaktischen Funktionen und Kategorien

Drei Prozeduren, **put-syn-func, insert-syn-cat, aux-insert,** fügen elementare syntaktische Informationen in die Baumstruktur und in die Knoten ein. Diese Prozeduren besitzen keinerlei Parameter.

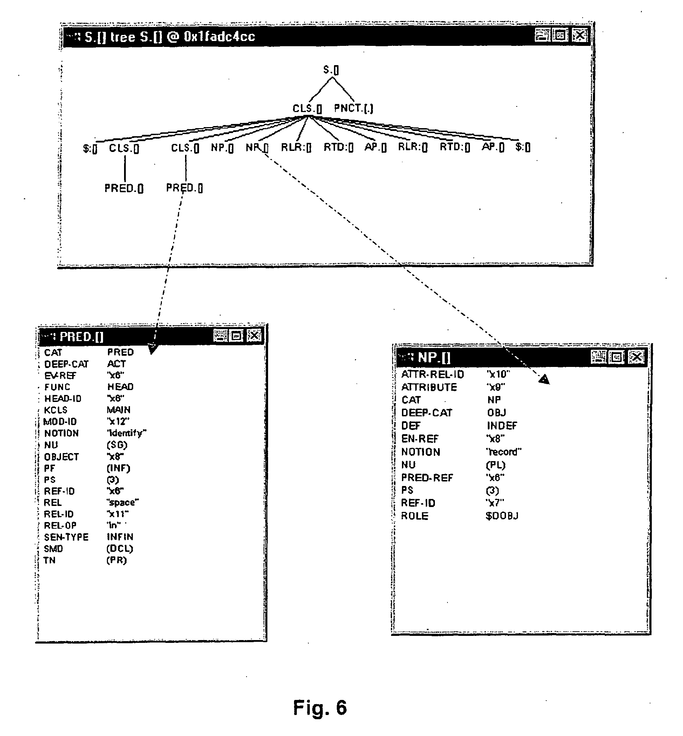

Fig. 6 stellt den Ablauf der Einfügung syntaktischer Kategorien dar.

### Generierung Schritt 3: Anwendung elementarer Operationen

Nach Auswertung des "tiefen" Eingabebaumes werden elementare Operationen, wie Einfügen oder Manipulation eines Teilbaumes, durchgeführt (z.B. Identifizierung von Koordinationen, Attributen und Beziehungen). Die entsprechenden Funktionen sind: **logicizer, attributor** und **relator.** Sie besitzen keinerlei Parameter.

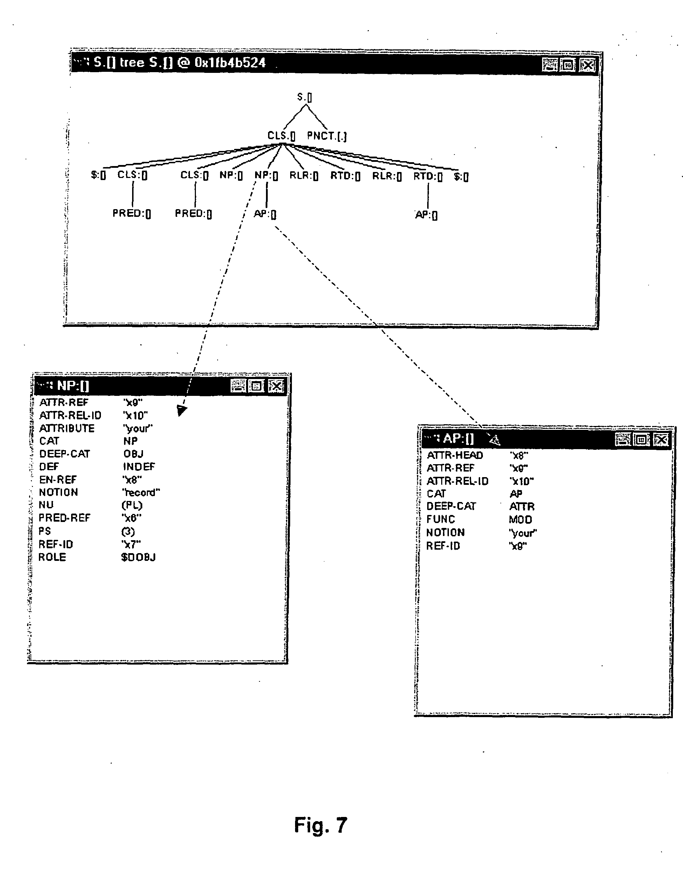

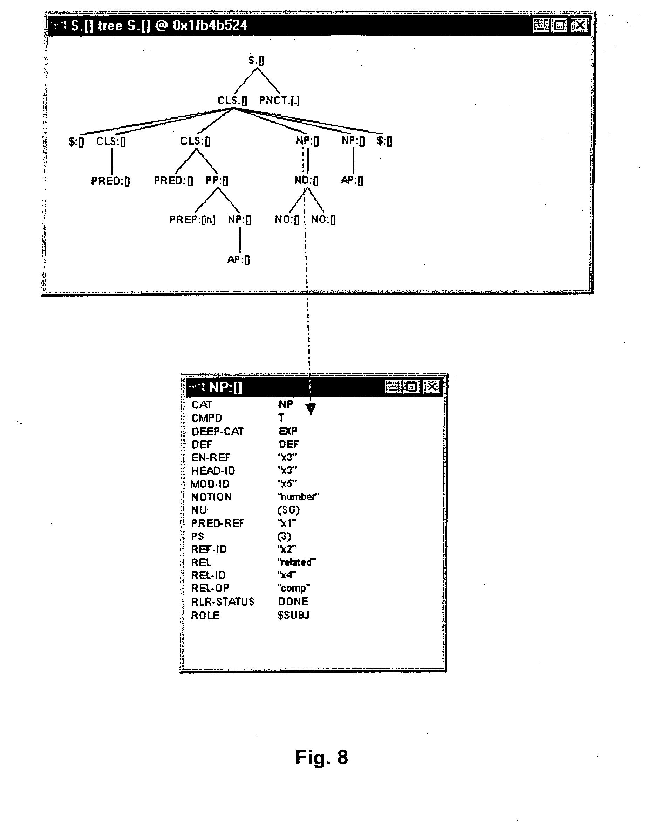

Fig. 7 stellt die Identifizierung logischer Verbindungen und Attribute dar. Fig. 8 stellt die identifizierten Beziehungen dar.

### Generierung Schritt 4: Zugriff auf lexikalische und/oder sprachspezifische Informationen

Nach Auswertung der Konzepte, die durch die strategische Generierungskomponente erzeugt wurden, werden diese durch kanonische Formen unter Zugriff auf das Lexikon ersetzt. Der Lexikonzugriff gestattet die Anwendung von Operationen für eine Vielzahl von (natürlichen) Sprachen. Der Zugriff auf das Lexikon erfolgt mittels folgender Funktionen: **get-prep-can** und **get-lex-info.** Sie besitzen keinerlei Parameter.

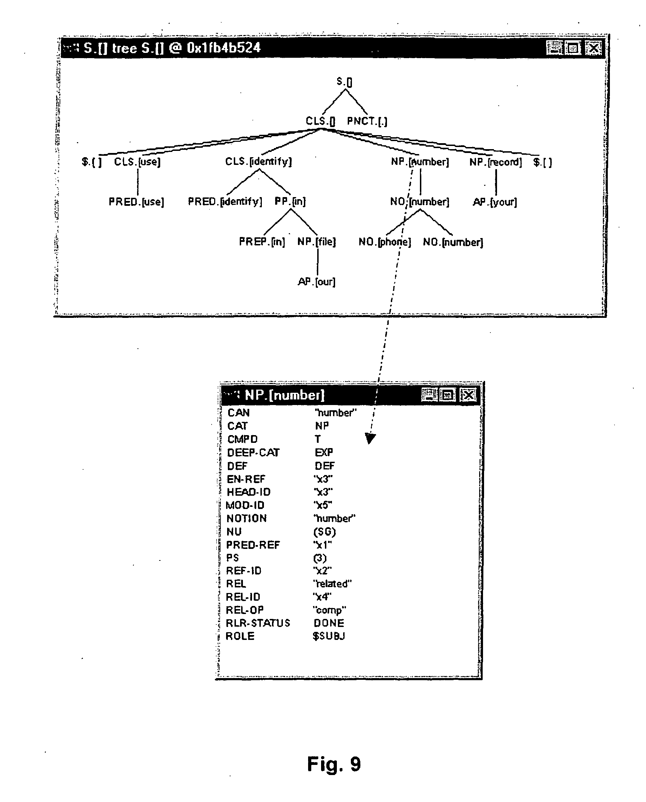

Fig. 9 stellt den Lexikon-Zugriff dar, im Detail wird das Einfügen kanonischer Formen (base lexemes) dargestellt.

### Generierung Schritt 5: Auswertung des strukturierten, "tiefen" syntaktischen Eingabebaumes

Dieser Schritt generiert syntaktische Strukturen (abzielend auf normalisierte SchnittstellenStrukturen) und behandelt lückenschaffende Phänomene, das Einfügen sprach-spezifischer Teile sowie die Anordnung von Strukturen untergeordneter Nebensätze. Die entsprechenden Funktionen sind: **internal-cls-structure, insert-specific-structure, del-ident-phrase,** und clsorder. Diese Funktionen besitzen keinerlei Parameter.

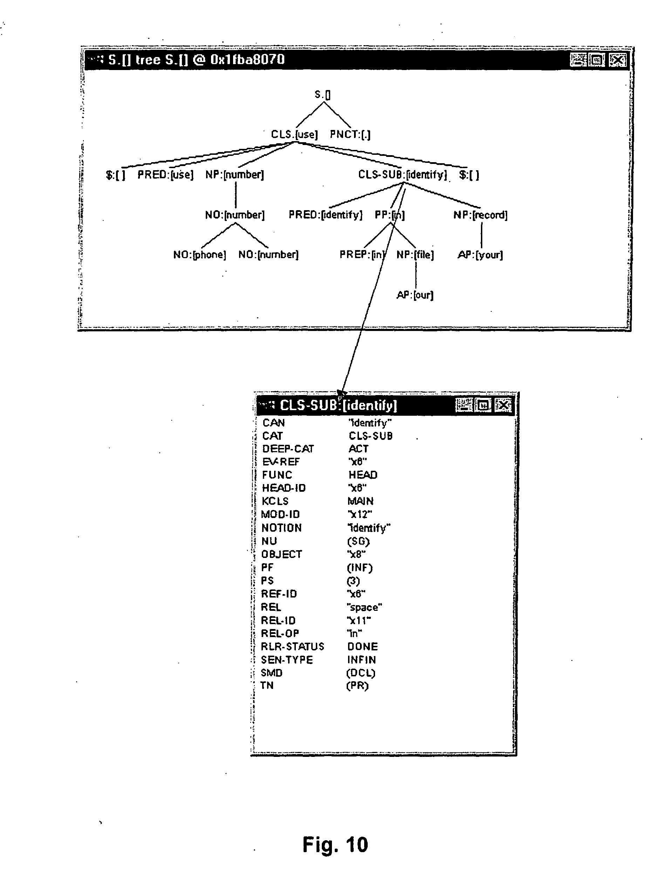

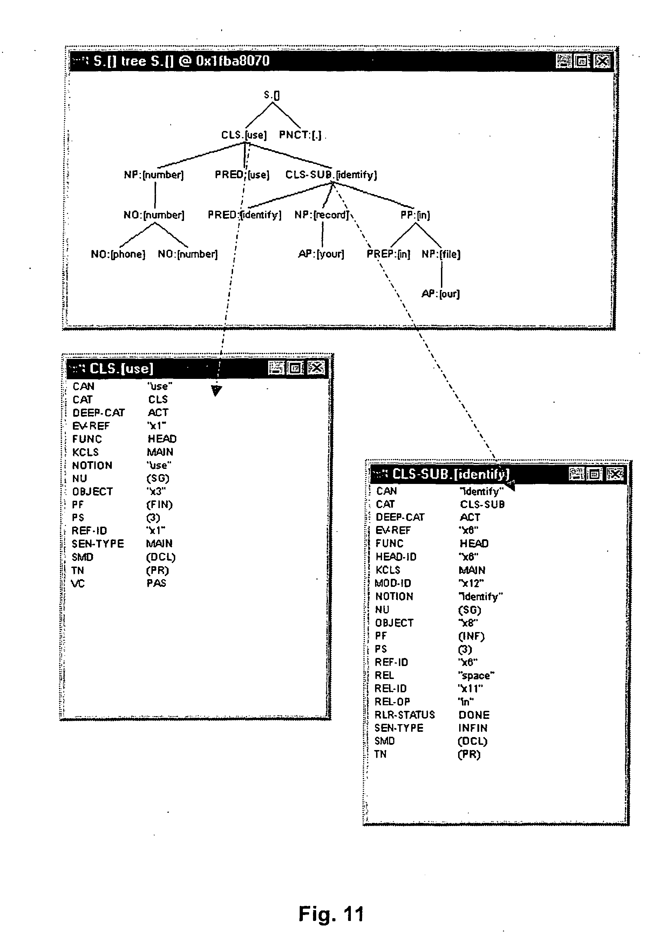

Fig. 10 zeigt syntaktisches Restrukturieren; Fig. 11 die Festlegung der Wort-reihenfolge in einem Nebensatz.

### Generierung Schritt 6: Realisierung des Strukturtyps und Expansion

Dieser Schritt behandelt die Einfügung und/oder Transformation von vor-definierten Strukturen, die Einfügung von Artikeln und Teilstrukturen von Nominal- und Adverbialphrasen. Die entsprechenden Funktionen sind: **struct-expansion, det-insert, np-order,** and **ap-order.** Sie besitzen keinerlei Parameter.

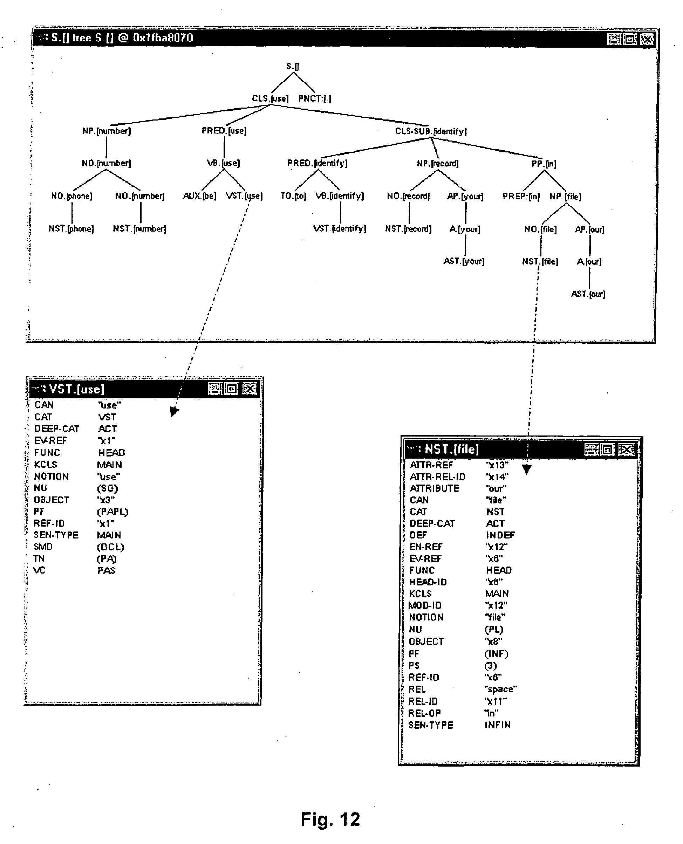

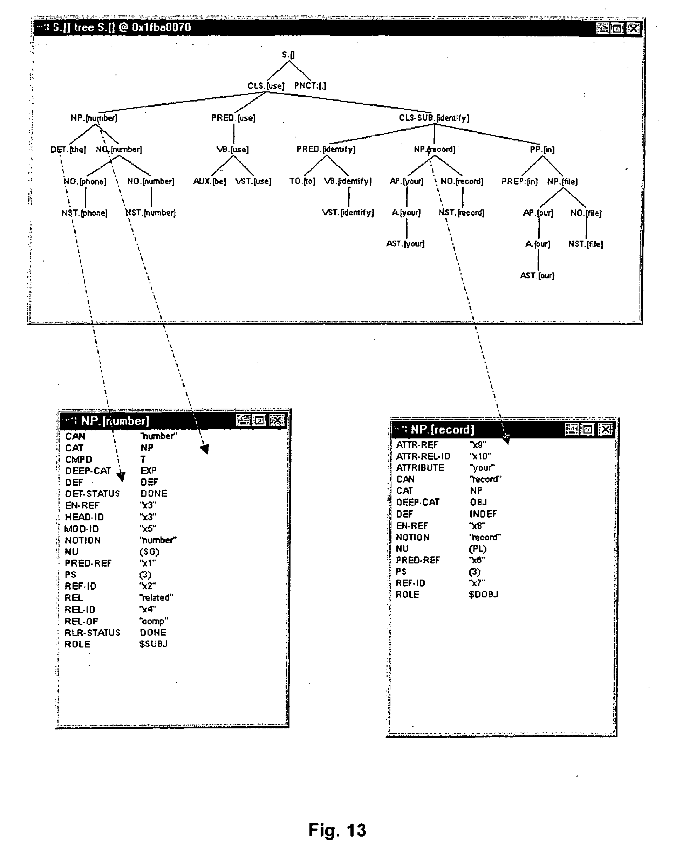

Fig. 12 stellt die expandierte syntaktische Struktur dar. Fig. 13 stellt die Festlegung der Reihenfolge von Phrasen und Einfügen von Artikeln dar.

### Generierung Schritt 7: morphologische Generierung

In diesem Schritt erfolgt ein Aufruf der morphologischen Generierungskomponente ("flexer tool"). Die entsprechende Funktion **get-inflected-form** besitzt keinerlei Parameter.

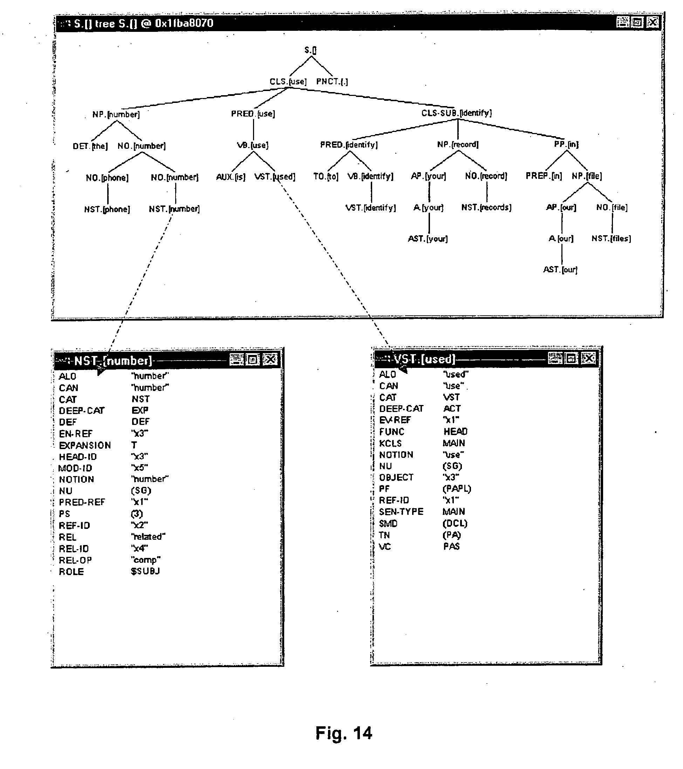

Fig. 14 stellt die Resultate dieses Aufrufs dar.

### Generierung Schritt 8: Abschließende Aufbereitung

Dieser Schritt umfasst eine Verfeinerung der phonetischen Ausgabe-Sequenz, Ausgabeerleichterungen und Säuberungsoperationen am Baum selbst und an dessen Knoten. Die entsprechenden Funktionen sind: corr-onset, mult-coord and clean-nodes. Sie besitzen keinerlei Parameter.

### Generierung Schritt 9: Ausgabefunktionen

Dieser Schritt erstellt eine graphische Aufbereitung der resultierenden Baumstruktur und der Ausgabesequenz (d.h. der eigentlichen Zeichenkette). Die zugehörigen Funktionen **draw** and **allostr** besitzen keinerlei Parameter.

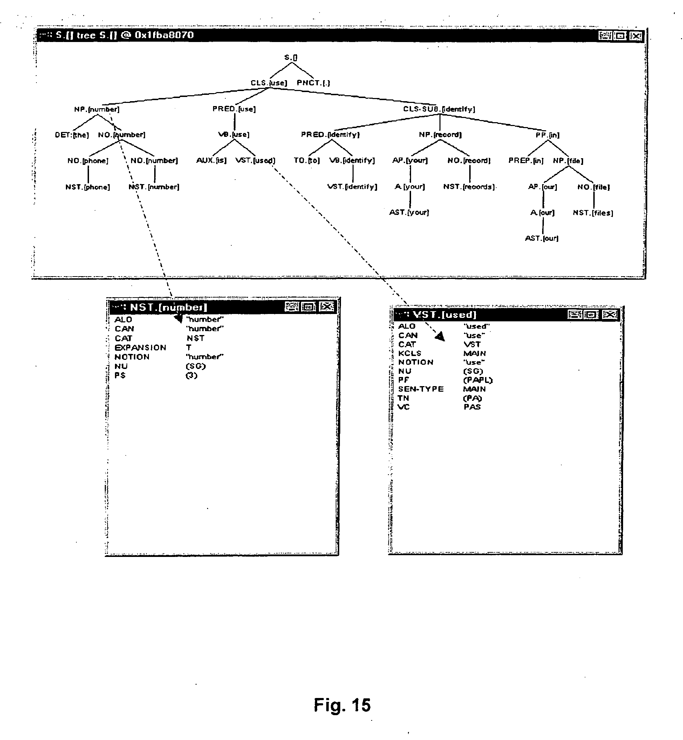

Fig. 15 stellt die resultierende Baumstruktur nach Anwendung dieser Operationen dar.

### Referenzen:

Busemann, S. (1996) Best-first surface realization. In *Proceedings of the Eighth International Workshop on Natural Language Generation,* pp. 101-110.
Busemann, S. and H. Horacek (1998) A flexible shallow approach to text generation. *In Proceedings of the Ninth International Workshop on Natural Language Generation*, pp. 238-247.
Elhadad, M. (1992) *Using Argumentation to Control Lexical Choice: A Functional Unificationbased Approach.* Doctoral dissertation. Columbia University, New York.
Elhadad, M. (1993) FUF: The universal unifier. User manual, version 5.2. Technical Report CUCS-038-91. Columbia University, New York.
Hovy, E. (1997) *Language Generation: Overview* (Chapter 4.1). In *Survey of the State of the Art in Human Language Technology,* Studies in Natural Language Processing. Cambridge University Press, pp. 139-146.
Joshi, A. K. (1987) Introduction to Tree Adjoining Grammar. In A. Manaster Ramer (ed) *The Mathematics ofLanguage,* 87-114. Amsterdam: John Benjamins.
Joshi, A.K., and Y. Schabes (1997) Tree-Adjoning Grammars." In G. Rozenberg and A. Salomaa (eds.) *Handbook of Formal Languages* 69-123. Berlin: Springer-Verlag.
Knight, K and V. Hatzivassiloglou (1995) Two-level, many-paths generation. In *Proceedings of the 33*^{*rd*} *Annual Meeting of the Association for Computational Linguistics (ACL 1995).* Cambridge, MA., pp. 252-260.
Langkilde, I. and K. Knight (1998a) Generation that exploits corpus-based statistical knowledge. In *Proceedings of the 36th Annual Meeting of the Association for Computational Linguistics and 17*^{*th*} *International Conference on Computational Linguistics (COLING-ACL 1998).* Montreal, Canada, pp. 704-710.
Langkilde, I. and K. Knight (1998b) The practical value of n-grams in generation. *In Proceedings of the Ninth International Workshop on Natural Language Generation,* pp. 248-255.
Mann, W.C. (1983) An overview of the Penman text generation system. In *Proceedings of the Thirs National Conference on Artificial Intelligence* (Washington, D.C., August 22-26, 1983), pp.261-265
McKeown, K. (1985) *Text Generation.* Cambridge: Cambridge University Press.
McRoy, S., S. Channarukul and S. S. Ali (2001) Creating natural language output for real-time applications. In *Intelligence* Volume 12, Number 2: 21-34. ACM.
Meteer, M.W., D.D.McDonald, S.D. Anderson, D.Forster, L.S.Gay, A.K.Huettner and P.Sibun (1987). Mumble-86: Design and Implementation. Technical report COINS 87-87. Computer and Information Science, University of Massachusetts, Amherst
Reiter, E. and R. Dale (2000) *Building Natural Language Generation Systems*, Studies in Natural Language Processing. Cambridge: Cambridge University Press.
Reiter, E. and R. Dale "Building Applied Natural Language Generation Systems", Natural Language Engineering. Cambridge : Cambridge University Press, pp. 57-87.

## Patentansprüche

1. Verfahren mit prozeduralem Ablauf in Verbindung mit einem computerbasierten Dialogsystem zur Erzeugung natürlicher Sprache bzw. natürlichsprachiger Ausdrücke in dem computer-basierten Dialogsystem, **dadurch gekennzeichnet, dass** das Verfahren folgende Schritte umfasst:
(1) Erzeugung eines Eingabe-Baumes mit einer semantisch-pragmatischen "tiefen" Struktur aus einer Eingabedatei, welche Datei durch eine Komponente des Dialogsystems bereitgestellt wird, die den Aussagegehalt bereitstellt, und welche Datei weiters eine Abfolge an Ausdrücken in SSRL, einer simplen, semantisch-pragmatischen Repräsentationssprache, enthält;
(2) Einfügen elementarer syntaktischer Information in die Baumstruktur und die Knoten des Baumes;
(3) Anwendung elementarer Operationen auf die Baumstruktur wie Einfügen und Manipulation eines Teilbaumes, z.B. Identifizierung von Koordinationen, Attributen und Beziehungen;
(4) Zugriff auf lexikalische und/oder sprachspezifische Informationen und Einfügen derselben in die Baumstruktur;
(5) Erzeugung syntaktischer Strukturen innerhalb der Baumstruktur, welche an normalisierte Schnittstellenstrukturen angepasst sind, aus einem strukturierten, tiefen syntaktischen Eingabebaum;
(6) Realisierung und Expansion von Struktur-Typen innerhalb der Baumstruktur durch Einfügen und/oder Transformation vordefinierter Strukturen, Einfügen von Artikeln, und/oder Anordnung von Sub-Strukturen;
(7) Generierung morphologischer Transformationen auf die Baumstruktur;
(8) optional, Verfeinerung der phonetischen Ausgabe-Sequenz, Ausgabevereinfachungen und Säuberungsoperationen am Baum selbst und an dessen Knoten;
(9) Ausgabe einer graphischen Repräsentation der resultierenden Baumstruktur und/oder einer diese repräsentierenden Zeichenkette.

2. Verfahren nach Anspruch 1, worin jeder Ausdruck der entsprechenden SSRL-Sequenz ausgewertet wird und die Resultate dieser Auswertung als flacher semantisch-pragmatischer Baum repräsentiert werden.

3. Verfahren nach Anspruch 1 oder 2, worin der Zugriff auf lexikalische und/oder spezifische Informationen durch Anwendung von Verfahrens-Prozessen erfolgt, die von natürlichen Sprachen, z.B. Deutsch, Englisch, unabhängig sind.

4. Verfahren nach einem der Ansprüche 1 bis 3, worin in Schritt (4) die durch die strategische Komponente des Dialogsystems zur Verfügung gestellten Aussageinhalte unter Zugriff auf Lexika durch ihre kanonischen Formen ersetzt werden.

5. Verfahren nach einem der Ansprüche 1 bis 4, worin in Schritt (5) eine Auswertung von Sprechpausen und Einfügungen als sprachspezifische Teile, sowie die Anordnung von untergeordneten, Nebensätzen entsprechenden, Strukturen erfolgt.

6. Computerprogrammprodukt, das direkt in den internen Speicher eines digitalen Computers geladen werden kann und Softwarecodeabschnitte umfasst, wobei mit dem Computer die Schritte des Verfahrens zur Erzeugung natürlicher Sprache in einem computer-basierten Dialogsystem gemäß einem der Ansprüche 1 bis 5 abgearbeitet werden, wenn das Produkt auf dem Computer läuft.

7. Computerprogrammprodukt nach Anspruch 6, wobei das Computerprogrammprodukt auf einem computerlesbaren Medium gespeichert ist.

## Claims

1. A method for generating natural language or natural language statement, with a procedural approach in connection with a computer-based dialog system, **characterized in that** the method comprises the following steps:
(1) generating an input tree with semantic-pragmatic deep structure from an input file, which input file is provided by a component of the dialog system providing notions/concepts, wherein the input file comprises a sequence of simple semantic-pragmatic representation language (SSRL) statements;
(2) inserting elementary syntactic information into the tree structure and onto the tree nodes;
(3) applying elementary operations to the tree structure, such as sub-tree insertion and manipulation, for instance, identification of coordinations, attributes and relations;
(4) accessing lexical and/or language specific information and inserting this information into the tree structure;
(5) generating syntactic structures within the tree structure, wherein the syntactic structures are adapted to normalized interface structures, from a deep-structure syntactic tree;
(6) realizing and expanding structure types within the tree structure by inserting and/or transforming pre-detined structures, inserting determiners, and/or ordering of substructures;
(7) generating morphologic transformations onto the tree structure;
(8) optionally, carrying out refinement of the phonetic output sequence, simplification and/or cleaning operations of the tree and its nodes;
(9) outputting a graphic representation of the final tree structure and/or a text string representing the final tree structure.

2. A method according to claim 1, wherein each statement of the respective SSRL-sequence is evaluated and the results of said evaluations are represented in a flat semantic-pragmatic tree.

3. A method according to claim 1 or 2, wherein accessing lexical and/or specific information is carried out by applying method processes that are independent of natural languages, like German or English.

4. A method according to any of claims 1 to 3, wherein step (4) comprises replacing notions/concepts supplied by said notions/concepts providing component of the dialog system with canonical forms of said notions/concepts via lexical access.

5. A method according to any of claims 1 to 4, wherein step (5) evaluates gapping phenomena and insertions as language specific parts as well as the ordering of sub-clausal structures that correspond to subordinate clauses.

6. A computer program product being directly loadable into the internal memory of a digital computer, comprising software code portions for performing the steps of the method for generating natural language in a computer-based dialog system according to one of claims 1 to 5 when said product is run on the computer.

7. A computer program product as claimed in claim 6, wherein the computer program product is stored on a computer readable medium.

## Revendications

1. Procédé avec déroulement procédural en liaison avec un système de dialogue basé sur ordinateur pour générer du langage naturel ou des expressions de langage naturel dans le système de dialogue basé sur ordinateur, **caractérisé en ce que** le procédé comprend les étapes suivantes :
(1) génération d'un arbre d'entrée avec une structure "profonde" sémantico-pragmatique constituée d'un fichier d'entrée, qui est mis à disposition par un composant du système de dialogue, qui fournit la teneur en information et contient également une succession d'expressions en SSRL, un langage de représentation simple et sémantico-pragmatique ;
(2) insertion d'information syntaxique élémentaire dans la structure d'arbre et les noeuds de l'arbre ;
(3) application d'opérations élémentaires à la structure d'arbre telles que l'insertion et la manipulation d'un arbre partiel, par exemple identification de coordinations, d'attributs et de relations ;
(4) accès à des informations lexicales et/ou spécifiques au langage et insertion des informations dans la structure d'arbre ;
(5) génération de structures syntaxiques à l'intérieur de la structure d'arbre, qui sont adaptées à des structures d'interface normalisées, à partir d'un arbre d'entrée structuré, syntaxique et profond ;
(6) réalisation et expansion de types de structure à l'intérieur de la structure d'arbre par insertion et/ou transformation de structures prédéfinies, insertion d'articles et/ou agencement de sous-structures ;
(7) génération de transformations morphologiques sur la structure d'arbre ;
(8) en option, affinement de la séquence de sortie phonétique, simplifications de sortie et opérations de nettoyage sur l'arbre mëme et sur ses noeuds ;
(9) sortie d'une représentation graphique de la structure d'arbre résultante et/ou d'une chaîne de caractères représentant celle-ci.

2. Procédé selon la revendication 1, dans lequel chaque expression de la séquence SSRL correspondante est analysée et les résultats de cette analyse sont représentés sous la forme d'un arbre plat sémantico-pragmatique.

3. Procédé selon la revendication 1 ou 2, dans lequel l'accès à des informations lexicales et/ou spécifiques s'effectue par l'application de processus de procédé, qui sont indépendants de langues naturelles, par exemple allemand, anglais.

4. Procédé selon l'une quelconque des revendications 1 à 3, dans lequel les teneurs en information mises à disposition par la composante stratégique du système de dialogue sont remplacées dans l'étape (4) par accès à des lexiques par leurs formes canoniques.

5. Procédé selon l'une quelconque des revendications 1 à 4, dans lequel une analyse de pauses de parole et d'insertions s'effectuent dans l'étape (5) sous la forme de parties spécifiques à la langue, et l'agencement de structures secondaires et correspondant à des ensembles annexes.

6. Produit de programme informatique, qui peut être chargé directement dans la mémoire interne d'un ordinateur numérique et comprend des parties de code de logiciel, les étapes du procédé étant traitées avec l'ordinateur pour générer une langue naturelle dans un système de dialogue basé sur ordinateur selon l'une quelconque des revendications 1 à 5 lorsque le produit fonctionne sur l'ordinateur.

7. Produit de programme informatique selon la revendication 6, le produit de programme informatique étant mémorisé sur un moyen lisible par ordinateur.
